# FASCICULE DE BREVET EUROPEEN

(11) **EP 0 397 553 B1**
(45) Date de publication et mention de la délivrance du brevet: **27.04.1994**
(21) Numéro de dépôt: 90401204.4
(22) Date de dépôt: 04.05.1990
(51) Int. Cl.: C01G 25/02

(54) **Zircone microporeuse et son procédé de préparation**
Mikroporöses Zirkoniumoxid und Verfahren zu dessen Herstellung
Microporous zirconia and process for its preparation

(30) Priorité: 10.05.1989 FR 8906090
(43) Date de publication de la demande: 14.11.1990
(73) Titulaire: RHONE-POULENC CHIMIE, 92408 Courbevoie Cédex (FR)
(72) Inventeur: Popa, Jean-Michel, F-93700 Drancy (FR)
(74) Mandataire: Dutruc-Rosset, Marie-Claude

(56) Documents cités:
- EP-A- 0 153 228
- EP-A- 0 239 478
- EP-A- 0 331 283
- JP-A- 5 021 996
- PATENT ABSTRACTS OF JAPAN, vol. 10, no. 128 (C-345), 13 mai 1986;
- & JP-A-60 255 622 (TOYO SODA KOGYO K.K.) 17-12-1985
- PATENT ABSTRACTS OF JAPAN, vol. 12, no. 198 (C-502)[3045], 8 juin 1988;& JP-A-63 2809 (NIPPON SHOKUBAI KAGAKU KOGYO CO., LTD) 07-01-1988

## Description

La présente invention a trait à l'oxyde de zirconium désigné habituellement par le terme "zircone". Plus précisément, l'invention a pour objet une zircone microporeuse et son procédé de préparation.

Le domaine de la catalyse, en particulier, la catalyse hétérogène, requiert à titre de catalyseurs ou de supports catalytiques des matériaux de grande surface spécifique et à forte porosité. Dans le cas d'applications catalytiques où l'on recherche une sélectivité de forme sur les réactifs, les produits et/ou les états intermédiaires de la réaction, on recherche tout particulièrement une microporosité, c'est-à-dire une porosité de taille moléculaire.

Il est connu d'utiliser en catalyse hétérogène, les zéolithes et les argiles pontées car elles satisfont à ces exigences de microporosité. De tels matériaux appartiennent aux mêmes familles des silicates ou aluminophosphates.

Un des objectifs de la présente invention est de fournir un nouveau matériau convenant à la catalyse, de composition chimique tout à fait différente permettant, par une diversification du matériau, d'obtenir de nouvelles propriétés pour des catalyses spécifiques.

Un objectif de l'invention est donc de fournir un matériaux à forte porosité.

Un autre objectif de l'invention est de fournir un matériau à forte microporosité.

Un autre objectif de l'invention est de fournir un matériau présentant une stabilité thermique de sa porosité.

Enfin, un dernier objectif est de disposer d'un procédé permettant l'accès à de tels matériaux.

La présente invention a précisément pour objet une zircone microporeuse caractérisée par le fait qu'elle présente des pores de diamètre moyen inférieur à 20 Å (2 nm), et, de préférence, inférieur ou égal à 15 Å (1,5 nm).

Avant de détailler la caractérisation du produit de l'invention, on précisera que dans l'exposé de l'invention, on détermine la surface spécifique par adsorption d'azote selon la méthode BRUNAUER-EMMETT-TELLER décrite dans le périodique "The Journal of American Society 60, 309 (1938)".

Le volume poreux et la taille des pores sont déterminés comme la surface spécifique, par la méthode B.E.T., jusqu'à des diamètres de pores inférieurs à 200 Å (20 nm).

Le volume poreux correspondant aux pores de diamètre inférieur à 600 Å (60 nm) est mesuré au porosimètre à mercure selon la norme ASTM D 4284-83.

Le volume poreux correspondant à des micropores de diamètre inférieur à 15 Å (1,5 nm) est déterminé selon la technique de la RMN au xénon telle que développée par Mr FRAISSARD [Journal de Chimie Physique 6, 83 (1986)].

Le volume poreux et la surface spécifique étant d'autant plus faibles que la température de calcination est élevée, il importe de définir la température de calcination. Dans la présente demande, les volumes poreux et les surfaces spécifiques exprimés sont mesurés sur un produit ayant subi une calcination d'au moins 2 heures.

Il est connu qu'une élévation de la température de calcination ou de la température d'utilisation d'un produit poreux fait chuter sa surface spécifique et son volume poreux.

La zircone, objet de la présente invention, présente la propriété de conserver une grande surface spécifique correspondant aux micropores à des températures élevées.

C'est ainsi qu'elle présente une surface spécifique correspondant aux micropores supérieure ou égale à 150 m²/g mesurée après calcination à 300°C, supérieure ou égale à 90 m²/g mesurée après calcination à 400°C. Ladite surface varie, de préférence, entre 90 m²/g et 220 m²/g mesurée après calcination entre 300°C et 400°C.

La surface spécifique correspondant aux micropores varie entre 10 m²/g et 220 m²/g environ mesurée après calcination entre 200°C et 600°C.

Pour ce qui est de sa surface spécifique totale, la zircone présente une surface spécifique comprise généralement entre 50 m²/g et 250 m²/g mesurée après calcination entre 200°C et 600°C.

Elle présente avantageusement une surface spécifique totale d'au moins 90 m²/g mesurée après calcination à une température comprise entre 300°C et 400°C, de préférence comprise entre 100 m²/g et 250 m²/g.

La zircone de l'invention possède une forte porosité. La taille des pores s'échelonne entre environ 4 Å (0,4 nm) et 200 Å (20 nm).

Une des caractéristiques de la zircone de l'invention est qu'elle a une répartition des pores bipopulée. Le diamètre moyen des micropores étant inférieur à 15 Å (1,5 nm) et supérieur à 5 Å (0,5 nm) et le diamètre moyen des mésopores variant entre 15 Å (1,5 nm) et 200 Å (20 nm).

D'une manière préférentielle, la zircone présente des micropores dont le diamètre moyen est compris entre 8 Å (0,8 nm) et 12 Å (1,2 nm).

On définit le diamètre moyen comme un diamètre tel que tous les pores inférieurs à ce diamètre constituent 50 % du volume poreux (Vp) total.

Le volume poreux total de la zircone de l'invention est, de préférence, supérieur ou égal à 0,1 cm³/g mesuré après calcination entre 300°C et 400°C.

La zircone préférée de l'invention présente un volume poreux total compris entre 0,15 cm³/g et 0,25 cm³/g mesuré après calcination entre 300°C et 400°C.

La zircone de l'invention possède une forte microporosité. Le volume poreux correspondant aux micropores est d'au moins 0,01 cm³/g, de préférence, compris entre 0,03 et 0,1 cm³/g mesuré après calcination entre 300°C et 400°C.

Une caractéristique de la zircone de l'invention est qu'elle présente une forte microporosité par rapport à la porosité totale. C'est ainsi que le rapport en % entre le volume poreux correspondant aux micropores et le volume poreux correspondant à la somme des micropores et des mésopores (inférieurs à 20 nm) est avantageusement compris entre 40 % et 70 %.

D'une manière inattendue, la zircone de l'invention présente une forte microporosité, même après calcination à haute température, ce qui est particulièrement intéressant pour les applications catalytiques.

Elle présente également la particularité de pouvoir contenir une faible teneur en anion plus covalent que l'anion hydroxyle. On précisera que le rapport molaire entre le nombre de moles d'anions et le nombre de moles de zirconium est inférieur à 0,5, et de préférence compris entre 0,01 et 0,2.

La présente invention a également pour objet un procédé d'obtention de la zircone microporeuse.

Il est caractérisé par le fait qu'il consiste à effectuer une thermohydrolyse d'un sel de zirconium, à séparer le précipité obtenu et à le calciner et qu'il consiste à mettre en oeuvre au moins un anion plus covalent que l'anion hydroxyle, avant l'étape de calcination.

Par thermohydrolyse, on entend hydrolyse du sel de zirconium, par chauffage de sa solution.

Par anion plus covalent que l'anion hydroxyle, on entend les anions qui peuvent se substituer aux anions hydroxyle de surface de la zircone.

Un premier mode de réalisation du procédé de l'invention consiste à introduire l'anion plus covalent que l'anion hydroxyle, lors de la thermohydrolyse.

Une deuxième variante d'exécution est de mettre en oeuvre ledit anion, subséquemment à l'étape de séparation, mais avant calcination.

Conformément au premier mode de mise en oeuvre du procédé de l'invention, on réalise dans une première étape, la préparation du précurseur de zircone.

A cet effet, on part d'un sel de zirconium. A titre d'exemples, on peut mettre en oeuvre les composés halogénés, oxyhalogénés ou perhalogénés de zirconium. On peut citer plus spécifiquement, le chlorure de zirconium, le bromure de zirconium, l'iodure de zirconium, le chlorure de zirconyle, le bromure de zirconyle, l'iodure de zirconyle.

Le chlorure de zirconium ZrCl₄ et le chlorure de zirconyle ZrOCl₂ sont choisis préférentiellement.

On fait appel indifféremment à une forme anhydre ou hydratée.

Le choix de la pureté du sel utilisé est choisi en rapport avec l'application envisagée.

Il peut être avantageux de mettre en jeu un sel de zirconium ayant une pureté supérieure à 95 %.

Le sel de zirconium est mis en oeuvre en solution aqueuse dont la concentration n'est limitée que par des problèmes de solubilité. Généralement, la concentration de la solution aqueuse de sel de zirconium exprimée en ion zirconium varie, de préférence, entre 1 et 2,5 moles/litre.

L'hydrolyse du sel de zirconium est réalisée en présence d'un anion plus covalent que l'anion hydroxyle. A titre d'anions convenant à l'invention, on peut citer les anions minéraux tels que par exemple, nitrate, sulfate, carbonate, phosphate ou organiques tels que carboxylate, par exemple, acétate, citrate, etc... Ils peuvent être apportés soit par un sel, soit par un acide.

Les ions précités peuvent être apportés par un sel, de préférence, un sel de métal alcalin, par exemple sodium, un sel de métal alcalino-terreux ou un sel d'ammonium. On choisit préférentiellement le sel d'ammonium du fait que l'ion ammonium est facilement éliminé lors du traitement thermique.

On peut mettre en oeuvre le sel apportant l'anion sous forme solide ou sous forme aqueuse.

Les générateurs d'anions peuvent être aussi des acides, de préférence, l'acide nitrique, sulfurique, phosphorique, acétique, citrique, etc... Ils peuvent être mis en oeuvre dilués ou concentrés. Généralement, la normalité de la solution d'acide est choisie, de préférence, entre 1 et 5 N.

Parmi les anions précités, on choisit tout particulièrement l'anion sulfate. On préfère l'apporter dans le milieu sous forme de sulfate d'ammonium, d'acide sulfurique ou bien par barbotage dans l'eau d'un gaz contenant du soufre tel que, par exemple, l'anhydride sulfureux, l'anhydride sulfurique.

L'ordre d'ajout de l'anion et du sel de zirconium est indifférent. Le plus souvent, l'anion est introduit dans la solution aqueuse de sel de zirconium.

La quantité d'anions ajoutée est telle que le rapport molaire entre le nombre de moles d'anions et le nombre de moles de zirconium est inférieur à 0,5, et de préférence, compris entre 0,01 et 0,2.

Il peut être intéressant d'ajouter afin de contrôler la force ionique du milieu, une quantité supplémentaire d'anion tel que celui apporté par le sel de zirconium. On introduit de préférence cet anion sous forme d'un sel de préférence de métal alcalin, alcalino-terreux ou d'ammonium ou sous forme d'un acide.

On fait appel, de préférence, à un sel d'ammonium.

La proportion d'anions ajoutée est de 0 à 10 moles par mole de sel de zirconium.

On effectue ensuite le traitement thermique du milieu réactionnel. Il consiste à le chauffer dans une enceinte close jusqu'à la température réactionnelle choisie.

Il s'agit donc d'une opération dite d'autoclavage.

Cette opération est effectuée à une température située entre la température de reflux et une température de 200°C environ. On choisit, de préférence, une température comprise entre 100°C et 150°C.

La montée en température s'effectue à une vitesse qui n'est pas critique. On atteint la température réactionnelle en chauffant par exemple entre 30 minutes et 4 heures.

On peut conduire le procédé de l'invention, en préparant ou en introduisant le milieu réactionnel dans une enceinte close, la pression ne résulte donc que du chauffage du mélange réactionnel.

Dans les conditions de températures données ci-dessus, et en milieu aqueux, on peut préciser, à titre illustratif que la pression varie entre 1 (10⁵ Pa) et 16 bars (16.10⁵ Pa) de préférence entre 1 (10⁵ Pa) et 5 bars (5.10⁵ Pa).

Il est également possible d'exercer une pression extérieure qui s'ajoute alors à celle consécutive au chauffage.

La durée de l'opération d'autoclavage n'est pas critique. Elle peut varier entre 30 minutes et 20 heures, de préférence, entre 2 et 12 heures.

A la fin de celle-ci, on laisse refroidir à l'inertie du système ce qui le ramène à la pression atmosphérique.

On sépare le produit en suspension dans le milieu liquide selon les techniques classiques de séparation solide-liquide telles que filtration, essorage et/ou centrifugation.

On récupère le précurseur de zircone qui est essentiellement un oxyhydrate de zirconium contenant des quantités résiduelles d'anions physisorbés et/ou chimisorbés provenant du sel de départ et/ou des anions plus covalents que l'anion hydroxyle.

Il est souhaitable de soumettre le précipité séparé à un lavage afin d'éliminer essentiellement les anions provenant du sel de départ et les anions plus covalents que l'anion hydroxyle physisorbés.

Le lavage est opéré, de préférence, à l'eau désionisée ou à l'aide d'une solution basique ayant, de préférence, une concentration comprise entre 1 et 5 N. On utilise, de préférence, une solution d'ammoniaque. On peut effectuer de un à plusieurs lavages et, le plus souvent, de un à cinq lavages. Un mode de réalisation du lavage consiste à mettre le précipité en suspension dans la solution de lavage à raison de 5 à 30 %. Il s'en suit une nouvelle séparation telle que précédemment mentionnée.

Le précipité séparé et de préférence lavé peut être directement calciné. Il est possible de le sécher au préalable mais cette opération est facultative.

La température de séchage peut varier entre la température ambiante (le plus souvent entre 15°C et 25°C) et 100°C et la durée de séchage n'est pas critique et peut être comprise entre 2 et 48 heures.

Selon la dernière étape du procédé de l'invention, on calcine, généralement à l'air, le produit obtenu à une température comprise entre 150°C et 600°C.

La température de calcination est choisie de telle sorte qu'elle soit inférieure à la température de décomposition de l'anion. Si l'anion est l'anion nitrate, la température est, de préférence, comprise entre 150°C et 300°C. Dans le cas de l'anion préféré, à savoir l'anion sulfate, on choisit avantageusement la température entre 200°C et 600°C.

La durée de la calcination peut varier dans de larges limites entre 30 minutes et 10 heures et, de préférence, entre 2 et 6 heures.

Après calcination, on obtient la zircone qui présente selon l'invention les propriétés intéressantes de microporosité.

Selon une autre variante de mise en oeuvre du procédé de l'invention, on effectue la thermohydrolyse du sel de zirconium, on sépare le précipité formé puis on traite le précipité par une solution aqueuse contenant au moins un anion plus covalent que l'anion hydroxyle, on sépare le précipité traité puis on le calcine.

La première étape du procédé de l'invention qui consiste à effectuer la thermohydrolyse d'un sel de zirconium, est conduite dans les mêmes conditions que celles décrites ci-dessus.

Il s'agit d'une opération d'autoclavage qui conduit à un précipité qui est essentiellement un oxyhydrate de zirconium contenant une faible quantité d'anion provenant du sel de départ qui peut être plus ou moins combiné ou adsorbé.

On sépare le précipité selon les techniques classiques de séparation solide-liquide telles que, par exemple, filtration, essorage et/ou centrifugation.

On peut comme mentionné précédemment soumettre le précipité à un lavage, de préférence à l'eau ou à l'aide d'une solution basique, afin d'éliminer les anions provenant du sel de départ jusqu'à obtention d'un pH compris de préférence entre environ 8 et environ 10.

Dans une étape suivante, on introduit l'anion plus covalent que l'anion hydroxyle. Il peut être apporté par un sel ou un acide et les composés précités conviennent tout à fait bien.

D'une manière analogue, l'anion sulfate est préféré.

Un premier mode de mise en contact de l'anion avec le précipité consiste à mettre en suspension, ce dernier dans la solution contenant ledit anion.

La proportion du précipité et du générateur d'anions sera telle que le rapport molaire entre le nombre de moles d'anions et le nombre de moles de zirconium, tel que précédemment défini, soit respecté.

L'opération est effectuée à température ambiante, le plus souvent entre 15°C et 25°C. On veillera à ce que le pH soit avantageusement compris entre 0,5 et 7.

On effectue une nouvelle séparation du précipité, on le sèche éventuellement et on le calcine dans les conditions telles que décrites précédemment.

Une autre variante de mise en oeuvre d'un anion sulfate consiste à traiter le précipité séparé suite à l'étape de thermohydrolyse de la manière qui suit.

On effectue auparavant un séchage à une température comprise entre de préférence 150°C et 300°C.

On apporte ensuite l'anion sulfate par un gaz tel que l'anhydride sulfurique ou un mélange d'anhydride sulfureux et d'oxygène. A cet effet, on envoie le courant gazeux sur le précipité séché.

On peut obtenir directement la zircone microporeuse. Il est également possible de réaliser une opération de calcination.

La zircone de l'invention est donc originale de par ses caractéristiques texturales.

Du point de vue de sa composition chimique, on peut préciser uniquement à titre indicatif qu'elle répond à la formule générale suivante :

ZrO₂₋ₓ(OH)_{y}(Aⁿ)_{z} (I)

dans ladite formule (I) :
- A symbolise l'anion plus covalent que l'anion hydroxyle,
- n représente la charge de l'anion plus covalent que l'anion hydroxyle,
- x, y et z sont des nombres tels que y + nz = 2 x
- z est un nombre inférieur à 0,5
- y est inférieur à 2,0.

D'une manière préférentielle, z est compris entre 0,01 et 0,2 et y est compris entre 0,1 et 1,0.

La formule générale (I) définit le pourcentage molaire d'anions dans la zircone de l'invention. Elle ne correspond en aucun cas à une définition exacte du produit de l'invention car ledit anion n'est pas distribué de manière homogène dans la masse mais essentiellement en surface.

En raison de ses propriétés intéressantes de microporosité, la zircone de l'invention peut être utilisée comme adsorbant sélectif, comme catalyseur ou support catalytique notamment pour des réactions de transformation de composés organiques variés telles que par exemple : l'alkylation d'hydrocarbures comme le benzène et le toluène, l'isomérisation des paraffines et naphtènes, la conversion d'éthers ou d'alcools en hydrocarbures, l'oxydation, la dismutation de composés aromatiques comme le toluène, le reformage, le craquage et l'hydrocraquage, la polymérisation des composés à liaison acétylénique, l'hydrogénation et déshydrogénation des hydrocarbures, la déshydratation des composés aliphatiques, la conversion de composés carbonyles aliphatiques ou d'oléfines, la méthanation, l'hydroxylation des aromatiques.

On donne ci-après des exemples de réalisation de l'invention qui, bien entendu, ne présentent aucun caractère limitatif.

### EXEMPLE 1

Dans cet exemple, on prépare une zircone microporeuse par traitement d'un précurseur de zircone par un anion nitrate.

On part d'une solution de ZrOCl₂ à 2,1 moles/litre commercialisé par la Société Magnesium Elektron.

On prépare par dilution avec de l'eau distillée une solution de chlorure de zirconyle à 0,5 mole/litre, dont on contrôle la force ionique, par addition, sous agitation forte de 2 moles de chlorure d'ammonium, par mole de zirconium.

Dans un autoclave dont la paroi interne est verrée, on introduit ladite solution.
L'ensemble est porté à 140°C, soit environ 3,9 bars pendant 12 heures au moyen d'un chauffage approprié.
A la fin du traitement hydrothermal, on obtient un précipité blanc que l'on sépare par filtration sur verre fritté n° 4.

Dans une étape suivante, on élimine les ions chlorure, en effectuant un lavage du précipité à l'aide d'une solution d'ammoniaque.
A cet effet, on disperse le précipité dans l'eau désionisée dans un rapport massique eau/zircone de 10. On ajoute ensuite une quantité suffisante d'une solution d'ammoniaque 1N, sous agitation vigoureuse, jusqu'à obtention d'une dispersion de pH voisin de 9.

On sépare le précipité par centrifugation.

On recommence plusieurs fois ce traitement au même pH jusqu'à disparition des ions chlorures. On contrôle l'élimination des ions chlorure par argentimétrie (AgNO₃), dans la solution de lavage récupérée après centrifugation du produit.

L'étape suivante consiste à effectuer le traitement du précurseur de zircone par un anion nitrate.
180 g du produit précédemment obtenu correspondant à 86,7 g de ZrO₂ déterminé par une perte au feu à 1000°C sont mis en dispersion dans 500 cm³ d'eau. On procède alors à l'addition lente (200 cm³/heure) d'une solution aqueuse d'acide nitrique 1N, sous agitation vigoureuse, jusqu 'à obtention d'un pH de dispersion de 2 (soit 60 cm³).

On sépare le produit obtenu, par centrifugation.

On soumet le produit séparé à un séchage de 100°C pendant 48 heures, puis à une calcination dans un four à moufles, 2 heures à 300°C.

On obtient une zircone contenant l'anion nitrate en une proportion telle que le rapport pondéral [NOₓ⁻]/[ZrO₂] est égal à 0,05.

L'analyse par diffraction X permet de déterminer une structure monoclinique.

La zircone obtenue présente les caractéristiques suivantes :
- surface spécifique BET de 216 m²/g
- surface spécifique correspondant à des pores de diamètre inférieur à 13 Å (1,3 nm) de 190 m²/g
- volume poreux correspondant
   . à des pores de diamètre inférieur à 1000 Å (100 nm) = 0,22 cm³/g
   . à des pores de diamètre inférieur à 200 Å ( 20 nm) = 0,12 cm³/g
   . à des pores de diamètre inférieur à 13 Å (1,3 nm) = 0,07 cm³/g

On détermine un même volume poreux de 0,22 cm³/g qu'il soit mesuré au tétrachlorure de carbone [diamètre cinétique = 7 Å (0,7 nm)] ou au triméthylbenzène [diamètre cinétique = 8,6 Å (0,86 nm)].

On note donc un volume microporeux de 0,07 cm³/g avec une entrée de pores comprise entre 8,6 Å (0,86 nm) et 13 Å (1,3 nm).

On corrobore ces résultats par la technique de caractérisation RMN du Xe, en calculant une entrée de pores supposés en forme de canaux cylindriques de 8 Å (0,8 nm).

### EXEMPLE 2

Dans l'exemple qui suit, on prépare une zircone microporeuse par traitement d'un précurseur de zircone par un anion sulfate.

On reproduit l'exemple 1 sauf que l'on remplace le traitement du précurseur de zircone par l'acide sulfurique au lieu de l'acide nitrique.

43 g du produit récupéré après lavage correspondant à 20,7 g de ZrO₂ sont mis en dispersion dans 200 cm³ d'eau. On procède alors à l'addition lente (200 cm³/heure) d'une solution aqueuse d'acide sulfurique 1N, sous agitation vigoureuse jusqu'à obtention d'un pH de dispersion de 2 (soit 47,5 cm³).

On sépare le produit obtenu, par centrifugation.

On soumet le produit séparé à un séchage de 100°C pendant 48 heures, puis à une calcination dans un four à moufles, 2 heures à 400°C.

On obtient une zircone contenant l'anion sulfate en une proportion telle que le rapport molaire [SO₄⁼]/[Zr⁴⁺] est égal à 0,12.

La zircone obtenue présente les caractéristiques suivantes :
- surface spécifique BET de 170 m²/g
- surface spécifique correspondant à des pores de diamètre inférieur à 13 Å (1,3 nm) de 140 m²/g
- volume poreux correspondant
   . à des pores de diamètre inférieur à 1000 Å (100 nm) = 0,20 cm³/g
   . à des pores de diamètre inférieur à 200 Å ( 20 nm) = 0,11 cm³/g
   . à des pores de diamètre inférieur à 13 Å (1,3 nm) = 0,04 cm³/g

### EXEMPLE 3

On donne, ci-après, une voie directe d'obtention de la zircone microporeuse à partir d'une solution de chlorure de zirconyle.

On part d'une solution de ZrOCl₂ à 2,1 moles/litre commercialisée par la Société Magnesium Elektron.

A partir de cette solution, on prépare par dilution avec de l'eau distillée, 600 cm³ d'une solution A à 1,05 moles/litre.

On prépare également une solution B contenant 0,062 mole de sulfate d'ammonium (NH₄)₂SO₄, par ajout de 8,26 g de ce sel, dans 250 cm³ d'eau distillée.

Dans un autoclave PROLABO chemisé au tantale, on introduit les solutions A et B. On a donc en solution les rapports molaires suivants :
. SO₄⁼/Zr⁴⁺ = 0,1
. H₂O/Zr⁴⁺ = 68

On chauffe la solution à 140°C, pendant 12 heures, sous agitation de 150 à 160 tours/mn.

On obtient une solution laiteuse.

On sépare le produit solide par centrifugation.

On effectue un lavage à l'eau du produit séparé, par mise en dispersion de celui-ci dans 800 cm³ d'eau distillée.

On sépare le produit par centrifugation.

On soumet le produit séparé à un séchage de 100°C pendant 16 heures, puis à une calcination dans un four à moufles, 2 heures à 400°C.

On obtient une zircone contenant l'anion sulfate en une proportion telle que le rapport molaire [SO₄⁼]/[Zr⁴⁺] est égal à 0,09.

L'analyse par diffraction X permet de déterminer une structure monoclinique.

La zircone obtenue présente les caractéristiques suivantes :
- surface spécifique BET de 140 m²/g
- surface spécifique correspondant à des pores de diamètre inférieur à 13 Å (1,3 nm) de 100 m²/g

### EXEMPLE 4

Dans l'exemple qui suit, on prépare une zircone microporeuse par traitement d'un précurseur de zircone par un anion phosphate.

On reproduit l'exemple 1 sauf que l'on remplace le traitement du précurseur de zircone par l'acide phosphorique au lieu de l'acide nitrique.

On prépare un litre d'une solution d'acide phosphorique à 0,01 mole/litre.

On ajoute rapidement à cette solution, 43 g du produit récupéré après lavage correspondant à 20,7 g de ZrO₂, sous agitation vigoureuse et à température ambiante. On agite la suspension pendant environ une heure.

On sépare le produit obtenu, par centrifugation.

On soumet le produit séparé à un séchage à 100°C pendant 16 heures, puis à une calcination dans un four à moufles, 2 heures à 300°C.

On obtient une zircone conenant l'anion phosphate en une proportion telle que le rapport molaire (PO₄³⁻)/(Zr⁴⁺) est égal à 0,1.

L'analyse par diffraction X permet de déterminer une structure monoclinique.

La zircone obtenue présente les caractéristiques suivantes :
- surface spécifique BET de 150 m²/g
- surface spécifique corespondant à des pores de diamètre inférieur à 13 Å (1,3 mm) de 120 m²/g
- volume poreux correspondant :
   . à des pores de diamètre inférieur à 1000 Å (100 nm) = 0,19 cm³/g
   . à des pores de diamètre inférieur à 200 Å ( 20 nm) = 0,10 cm³/g
   . à des pores de diamètre inférieur à 13 Å (1,3 nm) = 0,03 cm³/g

## Revendications

1. Zircone microporeuse caractérisée par le fait qu'elle présente des pores de diamètre moyen inférieur à 2 nm.

2. Zircone microporeuse selon la revendication 1 caractérisée par le fait que le diamètre moyen desdits pores est inférieur ou égal à 1,5 nm.

3. Zircone microporeuse selon l'une des revendications 1 et 2 caractérisée par le fait qu'elle présente une surface spécifique correspondant aux micropores supérieure ou égale à 150 m²/g mesurée après calcination à 300°C.

4. Zircone microporeuse selon l'une des revendications 1 à 3 caractérisée par le fait qu'elle présente une surface spécifique correspondant aux micropores supérieure ou égale à 90 m²/g mesurée après calcination à 400°C.

5. Zircone microporeuse selon l'une des revendications 1 à 4 caractérisée par le fait qu'elle présente une surface spécifique correspondant aux micropores comprise entre 90 et 220 m²/g mesurée après calcination entre 300°C et 400°C.

6. Zircone microporeuse selon l'une des revendications 1 à 5 caractérisée par le fait qu'elle présente une surface spécifique correspondant aux micropores comprise entre 10 et 220 m²/g mesurée après calcination entre 200 et 600°C.

7. Zircone microporeuse selon l'une des revendications 1 à 6 caractérisée par le fait que le volume poreux total est d'au moins 0,1 cm³/g mesuré après calcination entre 300°C et 400°C.

8. Zircone microporeuse selon la revendication 7 caractérisée par le fait que ledit volume poreux total est compris entre 0,15 et 0,25 cm³/g.

9. Zircone microporeuse selon l'une des revendications 1 à 8 caractérisée par le fait que le volume correspondant aux micropores est d'au moins 0,01 cm³/g mesuré après calcination entre 300°C et 400°C.

10. Zircone microporeuse selon la revendication 9 caractérisée par le fait que ledit volume microporeux est compris entre 0,03 et 0,1 cm³/g.

11. Zircone microporeuse selon l'une des revendicaitons 1 à 10 caractérisée par le fait qu'elle présente une répartition de pores bipopulée : le diamètre moyen des micropores étant compris entre 0,5 nm et 1,5 nm et le diamètre moyen des mésopores étant compris entre 1,5 et 20 nm.

12. Zircone microporeuse selon la revendication 11 caractérisée par le fait que le diamètre moyen des micropores est compris entre 0,8 nm et 1,2 nm.

13. Zircone microporeuse selon l'une des revendications 1 à 12 caractérisée par le fait que le rapport entre le volume poreux correspondant aux micropores et le volume poreux correspondant au volume poreux correspondant aux micropores et aux mésopores est compris entre 40 % et 70 %.

14. Zircone microporeuse selon l'une des revendications 1 à 13 caractérisée par le fait que le rapport molaire entre le nombre de moles d'un anion plus covalent que l'anion hydroxyle et le nombre de moles de zirconium est inférieur à 0,5.

15. Zircone microporeuse selon la revendication 14 caractérisée par le fait que ledit rapport molaire est compris entre 0,01 et 0,2.

16. Procédé d'obtention de la zircone microporeuse décrite dans l'une des revendications 1 à 15 caractérisé par le fait qu'il consiste à effectuer une thermohydrolyse d'un sel de zirconium, à séparer le précipité obtenu et à le calciner et qu'il consiste à mettre en oeuvre au moins un anion plus covalent que l'anion hydroxyle, avant l'étape de calcination.

17. Procédé selon la revendication 16 caractérisé par le fait qu'il consiste à introduire l'anion plus covalent que l'anion hydroxyle, lors de la thermohydrolyse.

18. Procédé selon la revendication 16 caractérisé par le fait qu'il consiste à introduire l'anion plus covalent que l'anion hydroxyle, subséquemment à l'étape de séparation, mais avant calcination.

19. Procédé selon l'une des revendications 16 à 18 caractérisé par le fait que le sel de zirconium est un composé halogéné, oxyhalogéné, perhalogéné de zirconium.

20. Procédé selon la revendication 19 caractérisé par le fait que le sel de zirconium est le chlorure de zirconium ou un chlorure de zirconyle.

21. Procédé selon l'une des revendications 19 et 20 caractérisé par le fait que la concentration de la solution aqueuse de zirconium, exprimée en ion zirconium varie entre 1 et 2,5 moles/litre.

22. Procédé selon l'une des revendications 16 à 21 caractérisé par le fait que l'anion plus covalent que l'anion hydroxyle est un anion nitrate, sulfate, phosphate ou un anion carboxylate, en particulier, acétate, citrate.

23. Procédé selon la revendication 22 caractérisé par le fait que l'anion est apporté par un sel de métal alcalin, alcalino-terreux ou d'ammonium ou par un acide.

24. Procédé selon la revendication 22 caractérisé par le fait que l'anion sulfate est apporté par un sulfate de métal alcalin, alcalino-terreux ou d'ammonium, par une solution d'acide sulfurique ou par barbotage dans l'eau, d'un gaz contenant du soufre.

25. Procédé selon l'une des revendications 16 à 24 caractérisé par le fait que la quantité d'anion plus covalent que l'anion hydroxyle est telle que le rapport molaire entre le nombre de moles d'anions et le nombre de moles de zirconium est inférieur,à 0,5.

26. Procédé selon la revendication 25 caractérisé par le fait que ledit rapport est compris entre 0,01 et 0,2.

27. Procédé selon la revendication 17 caractérisé par le fait que l'on additionne une quantité supplémentaire d'anion tel que celui du sel de zirconium.

28. Procédé selon la revendication 27 caractérisé par le fait que la proportion dudit anion est de 0 à 10 moles par mole de zirconium.

29. Procédé selon la revendication 16 caractérisé par le fait que l'on effectue la thermohydrolyse d'un sel de zirconium, en présence de l'anion plus covalent que l'anion hydroxyle à une température comprise entre la température de reflux et 200°C et que l'on sépare le précipité.

30. Procédé selon la revendication 29 caractérisé par le fait que le précipité séparé est soumis à un lavage à l'eau ou à l'aide d'une solution basique.

31. Procédé selon la revendication 16 caractérisé par le fait que l'on effectue la thermohydrolyse d'un sel de zirconium, à une température comprise entre la température de reflux et 200°C, que l'on sépare le précipité obtenu

32. Procédé selon la revendication 31 caractérisé par le fait que le précipité séparé est soumis à un lavage à l'eau ou à l'aide d'une solution basique.

33. Procédé selon l'une des revendications 30 et 32 caractérisé par le fait que la solution basique est une solution d'ammoniaque.

34. Procédé selon l'une des revendications 30 et 32 caractérisé par le fait que le précipité séparé est mis en contact avec l'anion plus covalent que l'anion hydroxyle, par mise en suspension dans une solution le contenant.

35. Procédé selon l'une des revendications 16 à 34 caractérisé par le fait que le précipité séparé est séché entre la température ambiante et 100°C.

36. Procédé selon l'une des revendications 31 à 33 caractérisé par le fait que l'anion sulfate est apporté par un gaz d'anhydride sulfurique ou d'un mélange d'anhydride sulfureux et d'oxygène par mise en contact du précipité auparavant séché avec ledit gaz.

37. Procédé selon l'une des revendications 16 à 36 caractérisé par le fait que le précipité est calciné entre 200°C et 600°C.

38. Procédé selon la revendication 37 caractérisé par le fait que la température de calcination est comprise entre 150°C et 300°C.

39. Procédé selon l'une des revendications 37 et 38 caractérisé par le fait que la durée de calcination varie entre 2 et 6 heures.

## Patentansprüche

1. Mikroporöses Zirkoniumdioxid, dadurch gekennzeichnet, daß der mittlere Porendurchmesser kleiner als 2 nm ist.

2. Mikroporöses Zirkoniumdioxid nach Anspruch 1, dadurch gekennzeichnet, daß der mittlere Porendurchmesser kleiner oder gleich 1,5 nm ist.

3. Mikroporöses Zirkoniumdioxid nach einem der Ansprüche 1 oder 2, dadurch gekennzeichnet, daß es nach der Calcinierung bei 300 °C eine den Mikroporen entsprechende spezifische Oberfläche von größer oder gleich 150 m²/g hat.

4. Mikroporöses Zirkoniumdioxid nach einem der Ansprüche 1 bis 3, dadurch gekennzeichnet daß es nach Calcinierung bei 400 °C eine den Mikroporen entsprechende spezifische Oberfläche von größer oder gleich 90 m²/g hat.

5. Mikroporöses Zirkoniumdioxid nach einem der Ansprüche 1 bis 4, dadurch gekennzeichnet, daß es nach der Calcinierung zwischen 300 °C und 400 °C eine den Mikroporen entsprechende spezifische Oberfläche zwischen 90 und 220 m²/g hat.

6. Mikroporöses Zirkoniumdioxid nach einem der Ansprüche 1 bis 5, dadurch gekennzeichnet, daß es nach der Calcinierung zwischen 200 °C und 600 °C eine den Mikroporen entsprechende spezifische Oberfläche zwischen 10 und 220 m²/g hat.

7. Mikroporöses Zirkoniumdioxid nach einem der Ansprüche 1 bis 6, dadurch gekennzeichnet, daß nach der Calcinierung zwischen 300°C und 400 °C das Gesamtporenvolumen mindestens 0,1 cm³/g beträgt.

8. Mikroporöses Zirkoniumdioxid nach Anspruch 7, dadurch gekennzeichnet, daß das Gesamtporenvolumen zwischen 0,15 und 0,25 cm³/g liegt.

9. Mikroporöses Zirkoniumdioxid nach einem der Ansprüche 1 bis 8, dadurch gekennzeichnet, daß nach der Calcinierung zwischen 300 °C und 400 °C das den Mikroporen entsprechende Volumen mindestens 0,01 cm³/g beträgt.

10. Mikroporöses Zirkoniumdioxid nach Anspruch 9, dadurch gekenn- zeichnet, daß das genannte mikroporöse Volumen zwischen 0,03 und 0,1 cm³/g liegt.

11. Mikroporöses Zirkoniumdioxid nach einem der Ansprüche 1 bis 10, dadurch gekennzeichnet, daß die Porenverteilung zweifach besetzt ist; Der mittlere Durchmesser der Mikroporen liegt zwischen 0,5 und 1,5 nm und der mittlere Durchmesser der Mesoporen liegt zwischen 1,5 und 20 nm.

12. Mikroporöses Zirkoniumdioxid nach Anspruch 11, dadurch gekennzeichnet, daß der mittlere Durchmesser der Mikroporen zwischen 0,8 und 1,2 nm liegt.

13. Mikroporöses Zirkoniumdioxid nach einem der Ansprüche 1 bis 12, dadurch gekennzeichnet, daß das Verhältnis zwischen dem Porenvolumen der Mikroporen und dem Porenvolumen der Mikroporen und Mesoporen zwischen 40 und 70 % liegt.

14. Mikroporöses Zirkoniumdioxid nach einem der Anspüche 1 bis 13, dadurch gekennzeichnet, daß das Molverhältnis zwischen der Anzahl der Mole des Anions, das kovalenter ist als das Hydroxylion, und der Anzahl der Mole von Zirkonium kleiner als 0,5 ist.

15. Mikroporöses Zirkoniumdioxid nach Anspruch 14, dadurch gekennzeichnet, daß das genannte molare Verhältnis zwischen 0,01 und 0,2 liegt.

16. Verfahren zur Herstellung von mikroporösem Zirkoniumdioxid nach einem der Ansprüche 1 bis 15, dadurch gekennzeichnet, daß man eine Thermohydrolyse eines Zirkoniumsalzes durchführt, den erhaltenen Niederschlag abtrennt und calciniert und daß vor der Calcinierung ein kovalenteres Anion als das Hydroxylion eingebracht wird.

17. Verfahren nach Anspruch 16, dadurch gekennzeichnet, daß man das Anion, das kovalenter ist als das Hydroxylion, während der Thermohydrolyse einbringt.

18. Verfahren nach Anspruch 16, dadurch gekennzeichnet, daß man das Anion, das kovalenter ist als das Hydroxylion, nach dem Separationsschritt, aber vor der Calcinierung einbringt.

19. Verfahren nach einem der Ansprüche 16 bis 18, dadurch gekennzeichnet, daß das Zirkoniumsalz ein Halogenid, Oxyhalogenid oder Perhalogenid des Zirkoniums ist.

20. Verfahren nach Anspruch 19, dadurch gekennzeichnet, daß das Zirkoniumsalz Zirkoniumchlorid oder Zirkonylchlorid ist.

21. Verfahren nach einem der Ansprüche 19 oder 20, dadurch gekennzeichnet, daß die Konzentration der wärßrigen Zirkoniumlösung, ausgedrückt als Zirkoniumion, zwischen 1 und 2,5 Mol. Zirkonium pro Liter variiert.

22. Verfahren nach einem. der Ansprüche 16 bis 21, dadurch gekennzeichnet daß das Anion, das kovalenter ist als das Hydroxylion, ein Nitrat-, Sulfat-, Phosphat- oder Carboxylatanion, vorzugsweise Acetat oder Citrat, ist.

23. Verfahren nach Anspruch 22, dadurch gekennzeichnet, daß das Anion als Alkali-, Erdalkali- oder Ammoniumsalz oder als Säure binzugegeben wird.

24. Verfahren nach Anspruch 22, dadurch gekennzeichnet daß das Sulfätanion als ein Alkali-, Erdalkali- oder Ammoniumsulfat, als eine Lösung von Schwefelsäure oder durch Einleiten eines schwefelhaltigen Gases in Wasser zugegeben wird.

25. Verfahren nach einem der Ansprüche 16 bis 24, dadurch gekennzeichnet, daß die Menge des Anions, das kovalenter ist als das Hydroxylion, derart ist, daß das Molverhältnis zwischen der Anzahl der Mole der Anionen und der des Zirkoniums kleiner als 0,5 ist.

26. Verfahren nach Anspruch 25, dadurch gekennzeichnet, daß das genannte Verhältnis zwischen 0,01 und 0,2 liegt.

27. Verfahren nach Anspruch 17, dadurch gekennzeichnet, daß man eine zusätzliche Menge an Anionen, wie die des Zirkoniumsalzes, hinzugibt.

28. Verfahren nach Anspruch 27, dadurch gekennzeichnet, daß das Verhältnis des genannten Anions zwischen 0 und 10, bezogen auf Zirkonium liegt.

29. Verfahren nach Anspruch 16, dadurch gekennzeichnet, daß man die Thermohydrolyse eines Zirkoniumsalzes in Gegenwart eines Anions, das kovalenter ist als das Hydroxylion, bei einer Temperatur zwischen der Rückflußtemperatur und 200 °C durchführt und den Niederschlag abtrennt.

30. Verfahren nach Anspruch 29, dadurch gekennzeichnet, daß der abgetrennte Niederschlag mit Wasser oder mittels einer basischen Lösung gewaschen wird.

31. Verfahren nach Anspruch 16, dadurch gekennzeichnet, daß man die Thermohydrolyse eines Zirkoniumsalzes bei einer Temperatur zwischen der Rückflußtemperatur und 200 °C durchführt und den erhaltenen Niederschlag abtrennt.

32. Verfahren nach Anspruch 31, dadurch gekennzeichnet, daß man den abgetrennten Niederschlag mit Wasser oder mittels einer basischen Lösung wäscht.

33. Verfahren nach einem der Ansprüche 30 oder 32, dadurch gekennzeichnet, daß die basische Lösung eine Ammoniaklösung ist.

34. Verfahren nach einem der Ansprüche 30 und 32, dadurch gekennzeichnet, daß der abgetrennte Niederschlag mit dem Anion, das kovalenter ist als das Hydroxylion, als Suspension in einer Lösung dieses Anions zusammengebracht wird.

35. Verfahren nach einem der Ansprüche 16 bis 34, dadurch gekennzeichnet, daß der abgetrennte Niederschlag bei einer Temperatur zwischen Raumtemperatur und 100 °C getrocknet wird.

36. Verfahren nach einem der Ansprüche 31 bis 33, dadurch gekennzeichnet, daß das Sulfatanion durch Inberührungbringen des zuvor getrockneten Niederschlags mit einem Gas eingeführt wird, das das schwefeltrioxidhaltiges Gas oder ein Gemisch von Schwefeldioxid und Sauerstoff ist.

37. Verfahren nach einem der Ansprüche 16 bis 36, dadurch gekennzeichnet, daß der Niederschlag zwischen 200 °C und 600 °C calciniert wird.

38. Verfahren nach Anspruch 37, dadurch gekennzeichnet, daß die Calcinierungstemperatur zwischen 150 °C und 300 °C liegt.

39. Verfahren nach einem der Ansprüche 37 und 38, dadurch gekennzeichnet, daß die Dauer der Calcinierung zwischen 2 und 6 Stunden schwankt.

## Claims

1. Microporous zirconia, characterised by the fact that it has pores of an average diameter of less than 2nm.

2. Microporous zirconia according to claim 1, characterised by the fact that the average diameter of said pores is less than or equal to 1.5nm.

3. Microporous zirconia according to one of claims 1 and 2, characterised by the fact that it has a specific surface area corresponding to micropores greater than or equal to 1 50m²/g measured after calcination at 300°C.

4. Microporous zirconia according to one of claims 1 to 3, characterised by the fact that it has a specific surface area corresponding to micropores greater than or equal to 90m²/g measured after calcination at 400°C.

5. Microporous zirconia according to one of claims 1 to 4, characterised by the fact that it has a specific surface area corresponding to micropores between 90 and 220 m²/g measured after calcination between 300°C and 400°C.

6. Microporous zirconia according to one of claims 1 to 5, characterised by the fact that it has a specific surface area corresponding to micropores between 10 and 220 m²/g measured after calcination between 200°C and 600°C.

7. Microporous zirconia according to one of claims 1 to 6, characterised by the fact that the total porous volume is at least 0.1 cm³/g measured after calcination between 300°C and 400°C.

8. Microporous zirconia according to claim 7, characterised by the fact that the total porous volume is between 0.15 and 0.25 cm³/g.

9. Microporous zirconia according to one of claims 1 to 8, characterised by the fact that the volume corresponding to micropores is at least 0.01 cm³/g measured after calcination between 300°C and 400°C.

10. Microporous zirconia according to claim 9, characterised by the fact that said microporous volume is between 0.03 and 0.1 cm³/g.

11. Microporous zirconia according to one of claims 1 to 10, characterised by the fact that it has a bi-populated pore distribution: the average diameter of micropores being between 0.5nm and 1.5nm and the average diameter of the mesopores being between 1.5nm and 20nm.

12. Microporous zirconia according to claim 11, characterised by the fact that the average diameter of the micropores is between 0.8nm and 1.2nm.

13. Microporous zirconia according to one of claims 1 to 12, characterised by the fact that the ratio of the porous volume corresponding to micropores to the porous volume corresponding to the porous volume corresponding to micropores and mesopores is between 40% and 70%.

14. Microporous zirconia according to one of claims 1 to 13, characterised by the fact that the molar ratio between the number of mols of an anion which is more covalent that the hydroxyl anion and the number of zirconium mols is less than 0.5.

15. Microporous zirconia according to claim 14, characterised by the fact that said molar ratio is between 0.01 and 0.2.

16. Method for obtaining microporous zirconi a described in one of claims 1 to 15, characterised by the fact that it consists of carrying out thermohydrolysation of a zirconiurn salt, of separating the precipitate obtained and of calcinating it and that it consists of using at least one anion more covalent than the hydroxyl anion, prior to the calcination stage.

17. Method according to claim 16, characterised by the fact that it consists of supplying the anion which is more covalent than the hydroxyl anion during the thermohydrolysation.

18. Method according to claim 16, characterised by the fact that it consists of supplying the anion which is more covalent than the hydroxyl anion subsequently to the separation stage but prior to calcination.

19. Method according to one of claims 16 to 18, characterised by the fact that the zirconium salt is a halogenated, oxyhalogenated or perhalogenated zirconium compound.

20. Method according to claim 19, characterised by the fact that the zirconium salt is chloride of zirconium or a chloride of zirconyl.

21. Method according to one of claims 19 and 20, characterised by the fact that the concentration of the aqueous zirconium solution, expressed in zirconium ions varies between 1 and 2.5 mols per litre.

22. Method according to one of claims 16 to 21, characterised by the fact that the anion which is more covalent that the hydroxyl anion is a nitrate, sulphate or phosphate anion, or a carboxylate anion, in particular an acetate or citrate.

23. Method according to claim 22, characterised by the fact that the anion is supplied by a salt of an alkali metal or alkaline earth metal or of ammonium, or by an acid.

24. Method according to claim 22, characterised by the fact that the sulphate anion is supplied by an alkali metal or alkaline earth metal or ammonium sulphate, by a sulphuric acid solution or by bubbling a sulphur-containing gas through water.

25. Method according to one of claims 16 to 24, characterised by the fact that the quantity of anion which is more covalent than the hydroxyl anion is such that the molar ratio between the number of anion mols and the number of zirconium mols is less than 0.5.

26. Method according to claim 25, characterised by the fact that said ratio is within the range of 0.01 and 0.2.

27. Method according to claim 17, characterised by the fact that a supplementary quantity of anion is added corresponding to that of the zirconium salt.

28. Method according to claim 27, characterised by the fact that the proportion of said anion is between 0 and 10 mols to the mol of zirconium.

29. Method according to claim 16, characterised by the fact that thermohydrolysation of a zirconium salt is carried out in the presence of the anion which is more covalent than the hydroxyl anion at a temperature within the range of the reflux temperature and 200°C and that the precipitate is separated.

30. Method according to claim 29, characterised by the fact that the separated precipitate is subjected to washing in water or with the aid of a basic solution.

31. Method according to claim 16, characterised by the fact that thermohydrolysation of a zirconium salt is carried out at a temperature between the reflux temperature and 200°C and that the precipitate obtained is separated.

32. Method according to claim 31, characterised by the fact that the separated precipitate is subjected to washing in water or with the aid of a basic solution.

33. Method according to one of claims 30 and 32, characterised by the fact that the basic solution is an ammonia solution.

34. Method according to one of claims 30 and 32, characterised by the fact that the separated precipitate is placed in contact with the anion which is more covalent than the hydroxyl anion by being placed in suspension in a solution which contains it.

35. Method according to one of claims 16 to 34, characterised by the fact that the separated precipitate is dried at between the ambient temperature and 100°C.

36. Method according to one of claims 31 to 33, characterised by the fact that the sulphate anion is supplied by a sulphuric anhydride gas or by a mixture of sulphurous anhydride and oxygen by the previously dried precipitate being placed in contact with said gas.

37. Method according to one of claims 16 to 36, characterised by the fact that the precipitate is calcinated at between 200°C and 600°C.

38. Method according to claim 37, characterised by the fact that the calcination temperature is between 150°C and 300°C.

39. Method according to one of claims 37 and 38, characterised by the fact that the calcination time varies between 2 and 6 hours.
